(19)

**Europäisches Patentamt**
**European Patent Office**
**Office européen des brevets**

(11) **EP 4 650 721 A1**

(12) **EUROPEAN PATENT APPLICATION**

(43) Date of publication:
**19.11.2025 Bulletin 2025/47**

(21) Application number: **25150087.2**

(22) Date of filing: **02.01.2025**

(51) International Patent Classification (IPC):
**G01D 5/20** (2006.01)      **G01D 3/02** (2006.01)
**H01F 38/18** (2006.01)      **H02P 6/16** (2016.01)

(52) Cooperative Patent Classification (CPC):
**H02P 6/16; G01D 3/02; G01D 5/204; H01F 38/18**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   **13.05.2024   CN 202410589005**

(71) Applicant: **Fortior Technology (Shanghai) Co., Ltd.**
**Shanghai 201800 (CN)**

(72) Inventors:
• **BI, Chao**
  **Shanghai, 201800 (CN)**
• **MA, Xiaojun**
  **Shanghai, 201800 (CN)**
• **BI, Lei**
  **Shanghai, 201800 (CN)**

(74) Representative: **Monteiro Alves, Inês**
**Alameda Dos Oceanos, Nº 41K-21**
**Parque das Nações**
**1990-207 Lisboa (PT)**

(54) **METHOD, SYSTEM AND DEVICE FOR DECODING ROTARY TRANSFORMER, AND STORAGE MEDIUM**

(57)      Disclosed are a method, a system and a device for decoding a rotary transformer, and a storage medium. The method includes: (S10), generating a first sine reference signal and a first cosine reference signal; (S20), obtaining a first difference signal by subtracting the first sine reference signal from a real-time sine signal, and obtaining a second difference signal by subtracting the first cosine reference signal from a real-time cosine signal; (S30), inputting the first difference signal and the second difference signal into a preset error model to obtain an overall error; (S40), when the overall error is greater than a preset error threshold, regenerating the first sine reference signal and the first cosine reference signal in cycles; or (S50), when the overall error is not greater than the preset error threshold, determining an angle output by the rotary transformer as a decoding result.

S10
generating a first sine reference signal and a first cosine reference signal based on a preset amplitude, a preset amplitude ratio of sine and cosine winding signals, a preset sine and cosine phase difference, and a preset phase of an initial positioning angle

S20
obtaining a first difference signal by subtracting the first sine reference signal from a real-time sine signal of the rotary transformer, and obtaining a second difference signal by subtracting the first cosine reference signal from a real-time cosine signal of the rotary transformer

S30
inputting the first difference signal and the second difference signal into a preset error model to obtain an overall error

S40
in response to detecting that the overall error is greater than a preset error threshold, performing regenerating the first sine reference signal and the first cosine reference signal based on an amplitude and a phase corresponding to the overall error in cycles

S50
in response to detecting that the overall error is less than or equal to the preset error threshold, determining an angle output by the rotary transformer as a decoding result

FIG. 1

EP 4 650 721 A1

**Description**

**TECHNICAL FIELD**

The present application relates to the technical field of rotary transformers, and in particular to a method, a system and a device for decoding a rotary transformer, and a storage medium.

**BACKGROUND**

A rotary transformer is an electromagnetic sensor and a type of small alternating current (AC) motor used for measuring angles. However, due to limitations in the manufacturing process, the two signal windings of a rotary transformer cannot achieve complete orthogonality, thereby leading to lower decoding accuracy of the rotary transformer.
Therefore, improving the decoding accuracy of rotary transformers remains a technical problem to be solved by those skilled in the art.
The above content is provided solely to aid in the understanding of the technical solutions described in the present application and does not constitute an acknowledgment that the above content is part of the prior art.

**SUMMARY**

The main objective of the present application is to provide a method, a system and a device for decoding a rotary transformer, and a storage medium, aiming to solve the technical problem of how to improve the accuracy of rotary transformer decoding.
In order to achieve the above objective, the present application provides a method for decoding a rotary transformer, including:

generating a first sine reference signal and a first cosine reference signal based on a preset amplitude, a preset amplitude ratio of sine and cosine winding signals, a preset sine and cosine phase difference, and a preset phase of an initial positioning angle;
obtaining a first difference signal by subtracting the first sine reference signal from a real-time sine signal of the rotary transformer, and obtaining a second difference signal by subtracting the first cosine reference signal from a real-time cosine signal of the rotary transformer;
inputting the first difference signal and the second difference signal into a preset error model to obtain an overall error;
in response to detecting that the overall error is greater than a preset error threshold, performing regenerating the first sine reference signal and the first cosine reference signal based on an amplitude and a phase corresponding to the overall error in cycles; or
in response to detecting that the overall error is less than or equal to the preset error threshold, determining an angle output by the rotary transformer as a decoding result.

In an embodiment, after the regenerating the first sine reference signal and the first cosine reference signal based on the amplitude and the phase corresponding to the overall error, the method further includes:
recording a cycle number, and determining the angle output by the rotary transformer as the decoding result in response to that the cycle number equals a preset iteration stop number.
In an embodiment, before the generating the first sine reference signal and the first cosine reference signal based on the preset amplitude, the preset amplitude ratio of sine and cosine winding signals, the preset sine and cosine phase difference, and the preset phase of the initial positioning angle, the method further includes:

performing zero-crossing detection on an excitation signal, the sine signal, and the cosine signal of the rotary transformer to obtain respective zero-crossing detection results;
obtaining a quadrant of a current rotor position based on the zero-crossing detection results, where the zero-crossing detection results represent positive or negative relationships of signals after passing a zero point;
generating a second sine reference signal and a second cosine reference signal based on the phase corresponding to the quadrant;
inputting the sine signal, the cosine signal, the excitation signal, the second sine reference signal, and the second cosine reference signal into a preset difference signal calculation model to obtain a third difference signal; and
in response to detecting that the third difference signal is less than or equal to a preset phase tolerance error, determining the angle of the rotary transformer as the initial positioning angle.

In an embodiment, after the inputting the sine signal, the cosine signal, the excitation signal, the second sine reference signal, and the second cosine reference signal into the preset difference signal calculation model to obtain the third difference signal, the method further includes:

in response to detecting that the third difference signal is greater than the phase tolerance error, performing accumulating the phase corresponding to the quadrant based on a preset angular step value to obtain a new phase and generating a new second sine reference signal and a new cosine reference signal based on the new phase in cycles, until the obtained third difference signal is less than or equal to the phase tolerance error.

In an embodiment, the obtaining the quadrant of the current rotor position based on the zero-crossing detection results includes:

comparing a zero-crossing detection result of the excitation signal with a zero-crossing detection result of the sine signal to obtain the quadrant of the current rotor position; or

comparing the zero-crossing detection result of the excitation signal with the zero-crossing detection result of the cosine signal to obtain the quadrant of the current rotor position.

In an embodiment, the comparing the zero-crossing detection result of the excitation signal with the zero-crossing detection result of the sine signal to obtain the quadrant of the current rotor position includes:

in response to the zero-crossing detection result of the excitation signal characterizing a positive signal after passing the zero point, and the zero-crossing detection result of the sine signal also characterizing a positive signal after passing the zero point, determining the current rotor position to be the first or second quadrant;

in response to the zero-crossing detection result of the excitation signal characterizing a negative signal after passing the zero point, and the zero-crossing detection result of the sine signal also characterizing a negative signal after passing the zero point, determining the current rotor position to be the first or second quadrant;

in response to the zero-crossing detection result of the excitation signal characterizing a positive signal after passing the zero point, and the zero-crossing detection result of the sine signal characterizing a negative signal after passing the zero point, determining the current rotor position to be the third or fourth quadrant; and

in response to the zero-crossing detection result of the excitation signal characterizing a negative signal after passing the zero point, and the zero-crossing detection result of the sine signal characterizing a positive signal after passing the zero point, determining the current rotor position to be the third or fourth quadrant.

In an embodiment, the comparing the zero-crossing detection result of the excitation signal with the zero-crossing detection result of the cosine signal to obtain the quadrant of the current rotor position includes:

in response to the zero-crossing detection result of the excitation signal characterizing a positive signal after passing the zero point, and the zero-crossing detection result of the cosine signal also characterizing a positive signal after passing the zero point, determining the current rotor position to be the first or fourth quadrant;

in response to the zero-crossing detection result of the excitation signal characterizing a negative signal after passing the zero point, and the zero-crossing detection result of the cosine signal also characterizing a negative signal after passing the zero point, determining the current rotor position to be the first or fourth quadrant;

in response to the zero-crossing detection result of the excitation signal characterizing a positive signal after passing the zero point, and the zero-crossing detection result of the cosine signal characterizing a negative signal after passing the zero point, determining the current rotor position to be the two or third quadrant; and

in response to the zero-crossing detection result of the excitation signal characterizing a negative signal after passing the zero point, and the zero-crossing detection result of the cosine signal characterizing a positive signal after passing the zero point, determining the current rotor position to be the two or third quadrant.

In addition, in order to achieve the above objective, the present application further provides a system for decoding a rotary transformer, including:

a first reference signal generation module, configured to generate a first sine reference signal and a first cosine reference signal based on a preset amplitude, a preset amplitude ratio of sine and cosine winding signals, a preset sine and cosine phase difference, and a preset phase of an initial positioning angle;

a difference signal calculation module, configured to obtain a first difference signal by subtracting the first sine reference signal from a real-time sine signal of the rotary transformer, and obtaining a second difference signal by subtracting the first cosine reference signal from a real-time cosine signal of the rotary transformer;

an error calculation module, configured to input the first difference signal and the second difference signal into a preset error model to obtain an overall error;

a loop module, configured to in response to detecting that the overall error is greater than a preset error threshold, perform regenerating the first sine reference signal and the first cosine reference signal based on an amplitude and a phase corresponding to the overall error in cycles; and

a decoding result output module, configured to in response to detecting that the overall error is less than or equal to the preset error threshold, determine an angle output by the rotary transformer as a decoding result.

In addition, in order to achieve the above objective, the present application further provides a device for decoding a rotary transformer, including a memory, a processor, and a computer program stored in the memory and executable on the processor, where the computer program is configured to implement the decoding method as described above.

In addition, in order to achieve the above objective, the present application further provides a computer-readable storage medium, and a computer program is stored on the storage medium. When the computer program is executed by a processor, the method for decoding the rotary transformer as described above are implemented.

One or more technical solutions provided in the present application have at least the following technical effects: The present application generates a first sine reference signal and a first cosine reference signal based on a preset amplitude, a preset sine and cosine winding signal amplitude ratio, a preset sine and cosine phase difference and a preset phase of an initial positioning angle. The reference signal can be generated based on the amplitude ratio and phase difference of the sine and cosine winding of the rotary transformer, that is, the amplitude ratio and phase difference of the sine and cosine winding are applied to the decoding calculation, thereby avoiding the influence of the incomplete orthogonality of the sine and cosine winding of the rotary transformer on the decoding. By subtracting the first sine reference signal from the real-time sine signal of the rotary transformer to obtain a first difference signal, and by subtracting the first cosine reference signal from the real-time cosine signal of the rotary transformer to obtain a second difference signal, the actual output of the rotary transformer during operation can be obtained. The difference between the real-time sine signal, the real-time cosine signal and the reference signal; then the first difference signal and the second difference signal are input into a preset error model to obtain an overall error; in response to detecting that the overall error is greater than the error threshold, the step of regenerating the first sine reference signal and the first cosine reference signal by the amplitude and phase corresponding to the overall error is cyclically executed. In response to detecting that the overall error is less than or equal to the preset error threshold, the angle output by the rotary transformer is used as the decoding result, and in response to detecting that the error between the actual signal and the reference signal meets the error threshold, it can be determined that the current angle output by the rotary transformer is a decoding angle that is not affected by the rotary transformer manufacturing process, thereby improving the accuracy of rotary transformer decoding.

## BRIEF DESCRIPTION OF THE DRAWINGS

The accompanying drawings, which are incorporated in and constitute a part of this specification, illustrate embodiments consistent with the present application and, together with the description, serve to explain the principles of the present application.

In order to more clearly illustrate the technical solutions in the embodiments of the present application or in the related art, drawings used in the embodiments or in the related art will be briefly described below. Obviously, the drawings in the following description are only some embodiments of the present application. It will be apparent to those skilled in the art that other figures can be obtained according to the structures shown in the drawings without creative work.

FIG. 1 is a schematic flowchart of a method for decoding a rotary transformer according to an embodiment of the present application.

FIG. 2 is a schematic flowchart of calculating an initial positioning angle of the method for decoding the rotary transformer according to an embodiment of the present application.

FIG. 3 is a schematic diagram of a decoding process of the method for decoding the rotary transformer according to an embodiment of the present application.

FIG. 4 is a schematic diagram of a structure of a system for decoding a rotary transformer according to an embodiment of the present application.

FIG. 5 is a schematic diagram of a device structure of a hardware operating environment involved in the method for decoding the rotary transformer according to an embodiment of the present application.

The realization of the objectives, functional features and advantages of the present application will be further described with reference to the embodiments and the accompanying drawings.

## DETAILED DESCRIPTION OF THE EMBODIMENTS

It should be understood that the specific embodiments described herein are only used to explain the present application, and are not intended to limit the present application.

In order to better understand the technical solution of the present application, a detailed description will be given below in conjunction with the accompanying drawings and specific implementation methods.

The main technical solution of the embodiment of the present application is: generating a first sine reference signal and a first cosine reference signal based on a preset amplitude, a preset amplitude ratio of sine and cosine winding signals, a preset sine and cosine phase difference, and a preset phase of an initial positioning angle; obtaining a first difference signal by subtracting the first sine reference signal from a real-time sine signal of the rotary transformer, and obtaining a second difference signal by subtracting the first cosine reference signal from a real-time cosine signal of the rotary transformer; inputting the first difference signal and the second difference signal into a preset error model to obtain an overall error; in response to detecting that the overall error is greater than a preset error threshold, performing regenerating the first sine reference signal and the first cosine reference signal based on an amplitude and a phase corresponding to the overall error in cycles; and in response to detecting that the overall error is less than or equal to the preset error threshold, determining an angle output by the rotary transformer as a decoding result.

The traditional rotary transformer decoding algorithm usually uses the tangent and anti-tangent of the sine and cosine signals output by the rotary transformer to obtain the position signal. The output signal of the rotary transformer is affected by various errors in the manufacturing process of the rotary transformer itself (for example, the two signal windings of the rotary transformer cannot be completely orthogonal), resulting in poor accuracy of the angles obtained by the traditional decoding method.

The present application provides a solution, so that the angle decoded by the rotary transformer will not be affected by the rotary transformer's own errors during the manufacturing process, thereby improving the accuracy of rotary transformer decoding.

It can be seen from the above embodiments that the present application adopts the preset amplitude ratio and overall error of the sine and cosine windings to participate in the decoding operation, thereby eliminating the influence of the rotary transformer body error on the decoding result, and improving the accuracy of rotary transformer decoding.

The execution subject of this application may be a computing service device with data processing, network communication and program running functions, such as a tablet computer, a personal computer, etc., or an electronic device capable of realizing the above functions. The following takes an electronic device as an example to illustrate this embodiment and the following embodiments.

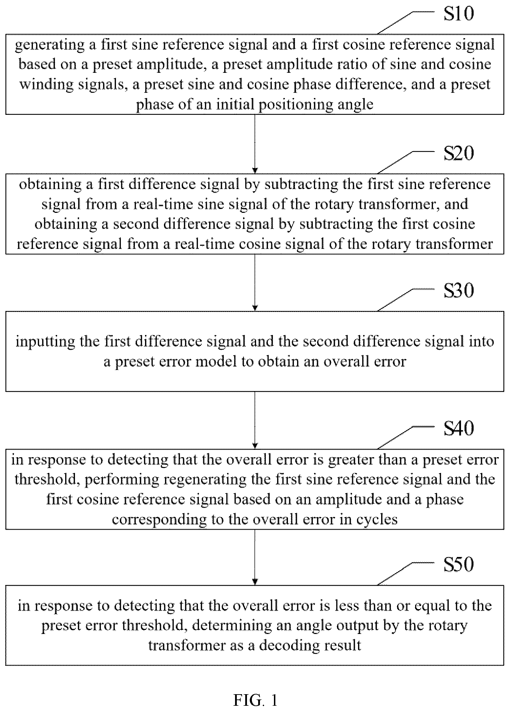

Based on this, an embodiment of the present application provides a method for decoding a rotary transformer. As shown in FIG. 1, FIG. 1 is a schematic flowchart of a method for decoding a rotary transformer according to an embodiment of the present application.

In this embodiment, the method for decoding the rotary transformer includes steps S10 to S50.

Step S10, generating a first sine reference signal and a first cosine reference signal based on a preset amplitude, a preset amplitude ratio of sine and cosine winding signals, a preset sine and cosine phase difference, and a preset phase of an initial positioning angle.

It should be noted that the preset amplitude refers to a value that is close to both the amplitude of the sine signal output by the rotary transformer and the amplitude of the cosine signal output by the rotary transformer. In an embodiment, in response to detecting that the amplitude difference between the sine signal and the cosine signal output by the rotary transformer is small, the amplitude of the sine signal or the amplitude of the cosine signal can be used as the preset amplitude. The preset sine and cosine winding signal amplitude ratio refers to the ratio between the amplitudes of the induced electromotive force generated by the sine winding and the cosine winding of the rotary transformer. The preset sine and cosine phase difference refers to the preset phase difference between the sine winding and the cosine winding when generating the induced electromotive force. The initial positioning angle refers to a preset rotor angle. In an embodiment, the initial positioning angle can be preset based on experience.

In this embodiment, a sine signal and a cosine signal can be randomly generated first, and then the sine signal and the cosine signal can be adjusted based on a preset amplitude, a preset sine and cosine winding signal amplitude ratio, a preset sine and cosine phase difference and a preset initial positioning angle phase, and the adjusted sine signal is used as a first sine reference signal, and the adjusted cosine signal is used as a first cosine reference signal.

S20, obtaining a first difference signal by subtracting the first sine reference signal from a real-time sine signal of the rotary transformer, and obtaining a second difference signal by subtracting the first cosine reference signal from a real-time cosine signal of the rotary transformer.

It should be noted that the real-time sine signal refers to the sine signal output by the rotary transformer in real time after the excitation signal is applied to the rotary transformer, and correspondingly, the real-time cosine signal refers to the cosine signal output by the rotary transformer in real time. It should also be noted that at the same time, the rotary transformer will output a sine signal and a cosine signal at the same time, and the real-time sine signal and real-time cosine signal provided in the present application refer to the signals corresponding to the same time. With the application of the excitation signal, the rotary transformer will output a sine signal and a cosine signal in real time.

In this embodiment, after applying the excitation signal, the sine signal output by the rotary transformer in real time can be subtracted from the first sine reference signal to obtain a first difference signal, and the cosine signal output by the rotary transformer in real time can be subtracted from the first cosine reference signal to obtain a second difference signal. It can be understood that at each moment after applying the excitation signal, a first difference signal and a second difference signal are obtained.

Step S30, inputting the first difference signal and the second difference signal into a preset error model to obtain an overall error.

It should be noted that the error model refers to a model for statistically analyzing the overall error. For example, the error model can be a formula for calculating the sum of squares, in which case the sum of squares of the first difference signal and the second difference signal is the overall error. In another embodiment, the error model can also be a formula for calculating the phase difference, in which case the phase difference is the overall error.

As an example, when $U$ represents the first difference signal, $V$ represents the second difference signal, and the error model is a formula for calculating the sum of squares, the sum of squares $Se$ can be expressed as:

$$Se = U^2 + V^2 .$$

Step S40, in response to detecting that the overall error is greater than a preset error threshold, performing regenerating the first sine reference signal and the first cosine reference signal based on an amplitude and a phase corresponding to the overall error in cycles.

It should be noted that the error threshold is a threshold predetermined based on experience or the self-error of the rotary transformer. The steps for calculating the amplitude and phase corresponding to the overall error are: deriving the formula corresponding to the error model with respect to the amplitude of the first sine reference signal, deriving the formula corresponding to the error model with respect to the phase of the initial positioning angle, and setting the two derived formulas equal to zero, and then using the Newton iteration method to solve the two formulas equal to zero, thereby obtaining a new set of amplitudes and phases. The condition for the Newton iteration method to stop iterating is: the difference between the phases obtained in two adjacent times is less than or equal to the preset threshold. The new amplitude and phase are the latest amplitude and phase solved by the Newton iteration method.

In this embodiment, in response to detecting that the overall error is greater than the error threshold, the error model is differentiated, the derived equation is set equal to zero, and the solution step is iterated to obtain a new amplitude and phase. Then the first sine reference signal and the first cosine reference signal are regenerated based on the new amplitude and phase, and then the steps of calculating the first difference signal and the second difference signal and calculating the overall error are executed.

Step S50, in response to detecting that the overall error is less than or equal to the preset error threshold, determining an angle output by the rotary transformer as a decoding result.

In this embodiment, in response to detecting that the overall error is less than or equal to a preset error threshold, the angle output by the rotary transformer is used as the decoding result; in response to detecting that the overall error is still greater than the error threshold, the process returns to execute the above step S40.

In an embodiment, the first difference signal U and the second difference signal V may be expressed as:

$$\begin{cases} U = As \cdot \sin(x - \delta) - Bs \cdot \sin(y0 - d) \\ V = (1+\alpha) \cdot As \cdot \cos(x + \delta) - (1+\alpha) \cdot Bs \cdot \cos(y0 + d) \end{cases},$$

*As* is the amplitude of the real-time sinusoidal signal, x is the current position of the rotor, y0 is the phase of the initial positioning angle, *Bs* is the amplitude of the first reference sinusoidal signal, $\alpha$ is the sine and cosine amplitude ratio, $\delta$ and d is 0.5 times the phase error of the sine and cosine signals.

Then the sum of the squares of U and V, *Se,* is calculated as:

$$Se = U^2 + V^2 .$$

Then, the square sum *Se* of the two difference signals of sine and cosine is differentiated with respect to *Bs and y0* respectively, and its value is set to zero. The expression is as follows:

$$\begin{cases} \partial \dfrac{Se}{Bs} = 0 \\[2mm] \partial \dfrac{Se}{y0} = 0 \end{cases}.$$

Then, the Newton iteration method is used to solve the derivative equation to obtain the error of two consecutive calculation results *of Bs and y0,* which is expressed as:

$$\begin{cases} \Delta Bs = -\dfrac{C_{22} \cdot (D_{11} + D_{13}) + Bs \cdot D_{12} \cdot C_{12}}{C_{12}^{\;2} - C_{11} \cdot C_{22}} \\[4mm] \Delta y = -\dfrac{C_{12} \cdot (D_{11} + D_{13}) + Bs \cdot D_{12} \cdot C_{11}}{C_{12}^{\;2} - C_{11} \cdot C_{22}} \end{cases};$$

where:

$$\begin{cases} C_{11} = (1+\alpha)^2 \cdot ((\cos(y0+d))^2 + (\sin(y0-d))^2) \\ C_{12} = -(\cos(y0-d) \cdot (U - Bs \cdot (\sin(y0-d)))) + (1+\alpha) \cdot (-V + Bs \cdot (1+\alpha) \cdot \cos(y0+d)) \cdot \sin(y0+d)) \\ C_{22} = Bs \cdot (Bs \cdot (\cos(y0-d))^2) + (1+\alpha)^2 \cdot \sin(y0+d)^2) + V \cdot (1+\alpha) \cdot \cos(y0+d) + U \cdot \sin(y0-d) \\ D_{11} = (1+\alpha)^2 \cdot (\cos(y0+d))^2 \\ D_{12} = -U \cdot \cos(y0-d) + V \cdot (1+\alpha) \cdot \sin(y0+d) \\ D_{13} = (\sin(y0-d))^2 \end{cases}$$

Then, in response to detecting that $\Delta y$ is less than or equal to the preset threshold, a new first reference sine signal and a new first reference cosine signal are generated based on the latest amplitude and phase solved by the Newton iteration method. The new first reference sine signal and the real-time sine signal at the current moment are subtracted to obtain a new first difference signal, and the new first reference cosine signal and the real-time cosine signal at the current moment are subtracted to obtain a new second difference signal, and the overall error is calculated. If the overall error is still greater than or equal to the error threshold, continue to derive and use the Newton iteration method to solve, and continue to generate the first reference sine signal in a loop. The step of comparing the overall error with the error threshold is performed, until the overall error is less than the error threshold. Then the angle output by the rotary transformer is output at this moment as the decoding result.

In this embodiment, the present application generates a first sine reference signal and a first cosine reference signal based on a preset amplitude, a preset sine and cosine winding signal amplitude ratio, a preset sine and cosine phase difference and a preset initial positioning angle phase. The reference signal can be generated based on the amplitude ratio and phase difference of the sine and cosine winding of the rotary transformer, that is, the amplitude ratio and phase difference of the sine and cosine winding are applied to the decoding calculation, thereby avoiding the influence of the incomplete orthogonality of the sine and cosine winding of the rotary transformer on the decoding. Then, by subtracting the first sine reference signal from the real-time sine signal of the rotary transformer to obtain a first difference signal, and by subtracting the first cosine reference signal from the real-time cosine signal of the rotary transformer to obtain a second difference signal, the actual operation of the rotary transformer during operation can be obtained. The difference between the real-time sine signal and the real-time cosine signal outputted actually and the reference signal is calculated. Then the first difference signal and the second difference signal are input into a preset error model to obtain an overall error; in response to detecting that the overall error is greater than the error threshold, the step of regenerating the first sine reference signal and the first cosine reference signal by the amplitude and phase corresponding to the overall error is cyclically executed; in response to detecting that the overall error is less than or equal to the preset error threshold, the angle output by the rotary transformer is taken as the decoding result, and in response to detecting that the error between the actual signal and the reference signal meets the error threshold, it can be judged that the current angle output by the rotary transformer is a decoding angle that is not affected by the manufacturing process of the rotary transformer, thereby improving the accuracy of the rotary transformer decoding.

Based on the first embodiment of the present application, a second embodiment of the present application is provided. In the second embodiment of the present application, the same or similar contents as those of the first embodiment can be referred to the above introduction and will not be repeated later. On this basis, after the above-mentioned step S40, the method further includes:

Step S60, recording a cycle number, and determining the angle output by the rotary transformer as the decoding result in response to that the cycle number equals a preset iteration stop number.

It should be noted that the number of cycles refers to the total number of times the first sine reference signal and the first cosine reference signal are regenerated.

In this embodiment, in order to reduce the time required for decoding, the number of iteration stop times may be preset, and in response to detecting that the number of cycles is equal to the number of iteration stop times, the angle output by the rotary transformer may be used as the decoding result.

Based on the first or the second embodiment of the present application, the third embodiment of the present application is provided. The contents that are the same or similar to the above embodiments are not repeated in this embodiment.

In this embodiment, before the above step S 10, the method further includes:

Step S70, performing zero-crossing detection on an excitation signal, the sine signal, and the cosine signal of the rotary transformer to obtain respective zero-crossing detection results, obtaining a quadrant of a current rotor position based on the zero-crossing detection results, where the zero-crossing detection results represent positive or negative relationships of signals after passing a zero point.

It should be noted that the zero-crossing detection refers to detecting the zero point of an AC signal (such as a sine wave) (i.e., the point where the waveform passes through zero when switching from a positive half cycle to a negative half cycle or from a negative half cycle to a positive half cycle). In this embodiment, the zero-crossing detection result is determined based on the first value of the signal after passing the zero point.

In this embodiment, after an excitation signal is applied to the rotary transformer and the rotary transformer outputs a sine signal and a cosine signal, a zero-crossing detection result can be obtained based on the first value of the sine signal, the excitation signal, and the cosine signal after the zero point, and then the quadrant in which the current rotor position is located can be obtained based on each zero-crossing detection result.

In an embodiment, the step S70 further includes step S701 or step S702.

Step S701, comparing a zero-crossing detection result of the excitation signal with a zero-crossing detection result of the sine signal to obtain the quadrant of the current rotor position.

It should be noted that the zero-crossing detection result represents the positive or negative condition of the first value after the signal passes the zero point. Therefore, in this embodiment, the quadrant in which the current rotor position is located can be determined by comparing the positive or negative condition of the first value after the excitation signal passes the zero point with the positive or negative condition of the first value after the sinusoidal signal passes the zero point.

In an embodiment, the step S701 includes:

step S7011, in response to the zero-crossing detection result of the excitation signal characterizing a positive signal after passing the zero point, and the zero-crossing detection result of the sine signal also characterizing a positive signal after passing the zero point, determining the current rotor position to be the first or second quadrant;

step S7012, in response to the zero-crossing detection result of the excitation signal characterizing a negative signal after passing the zero point, and the zero-crossing detection result of the sine signal also characterizing a negative signal after passing the zero point, determining the current rotor position to be the first or second quadrant;

step S7013, in response to the zero-crossing detection result of the excitation signal characterizing a positive signal after passing the zero point, and the zero-crossing detection result of the sine signal characterizing a negative signal after passing the zero point, determining the current rotor position to be the third or fourth quadrant; and

step S7014, in response to the zero-crossing detection result of the excitation signal characterizing a negative signal after passing the zero point, and the zero-crossing detection result of the sine signal characterizing a positive signal after passing the zero point, determining the current rotor position to be the third or fourth quadrant.

In this embodiment, compared with the traditional method of determining the quadrant of the rotor position angle based on sine signals and cosine signals, this embodiment only needs to focus on the zero crossing points of the excitation signal and the sine signal, and can respond to changes in the rotor position more quickly, thereby obtaining a more accurate quadrant for the rotor position.

Step S702, comparing the zero-crossing detection result of the excitation signal with the zero-crossing detection result of the cosine signal to obtain the quadrant of the current rotor position.

In this embodiment, the quadrant in which the current rotor position is located can also be determined by comparing the positive and negative conditions of the first value of the excitation signal after passing the zero point and the positive and negative conditions of the first value of the cosine signal after passing the zero point.

In an embodiment, the above step S702 further includes:

Step S7021, in response to the zero-crossing detection result of the excitation signal characterizing a positive signal after passing the zero point, and the zero-crossing detection result of the cosine signal also characterizing a positive signal after passing the zero point, determining the current rotor position to be the first or fourth quadrant;

Step S7022, in response to the zero-crossing detection result of the excitation signal characterizing a negative signal after passing the zero point, and the zero-crossing detection result of the cosine signal also characterizing a negative signal after passing the zero point, determining the current rotor position to be the first or fourth quadrant;

Step S7023, in response to the zero-crossing detection result of the excitation signal characterizing a positive signal after passing the zero point, and the zero-crossing detection result of the cosine signal characterizing a negative signal after passing the zero point, determining the current rotor position to be the two or third quadrant; and

Step S7024, in response to the zero-crossing detection result of the excitation signal characterizing a negative signal after passing the zero point, and the zero-crossing detection result of the cosine signal characterizing a positive signal after passing the zero point, determining the current rotor position to be the two or third quadrant.

In this embodiment, only the zero-crossing points of the excitation signal and the cosine signal are focused, and may also respond to the change of the rotor position more quickly, thereby obtaining a more accurate quadrant in which the rotor position is located.

Step S80, inputting the sine signal, the cosine signal, the excitation signal, the second sine reference signal, and the second cosine reference signal into a preset difference signal calculation model to obtain a third difference signal;

It should be noted that the difference signal calculation model refers to a model that can comprehensively measure the differences between the sine signal, the cosine signal and the second sine reference signal and the second cosine reference signal.

In this embodiment, before generating the second sine reference signal and the second cosine reference signal, a reference phase can be preset for each quadrant, and then the current angle of the rotor is subtracted from the reference phase of the quadrant to obtain a phase offset. Then the pre-generated basic sine signal and basic cosine signal with a fixed frequency are adjusted based on the phase offset, the adjusted basic sine signal is used as the second sine reference signal, and the adjusted basic cosine signal is used as the second cosine reference signal.

In an embodiment, after obtaining the sine signal, the cosine signal, the excitation signal, the second sine reference signal and the second cosine reference signal, the obtained signals may be input into the following difference signal calculation model to calculate the third difference signal *UC:*

$$UC = XS \cdot YC - YS \cdot XC = K \cdot \sin(x - y),$$

where, *XS* is the sine signal, *XC* is the cosine signal, *YS* is the product of the second sine reference signal and the excitation signal, *YC* is the product of the second cosine reference signal and the excitation signal, *K* is a non-zero difference coefficient, x is the current position of the rotor, and y is the angle value of the sine signal.

Step S90, in response to detecting that the third difference signal is less than or equal to a preset phase tolerance error, determining the angle of the rotary transformer as the initial positioning angle.

In this embodiment, in response to detecting that the third difference signal is less than or equal to a preset phase allowable error, the rotor angle of the rotary transformer is used as the initial positioning angle.

In an embodiment, after the step S80, the method further includes:

Step S100, in response to detecting that the third difference signal is greater than the phase tolerance error, performing accumulating the phase corresponding to the quadrant based on a preset angular step value to obtain a new phase and generating a new second sine reference signal and a new cosine reference signal based on the new phase in cycles, until the obtained third difference signal is less than or equal to the phase tolerance error.

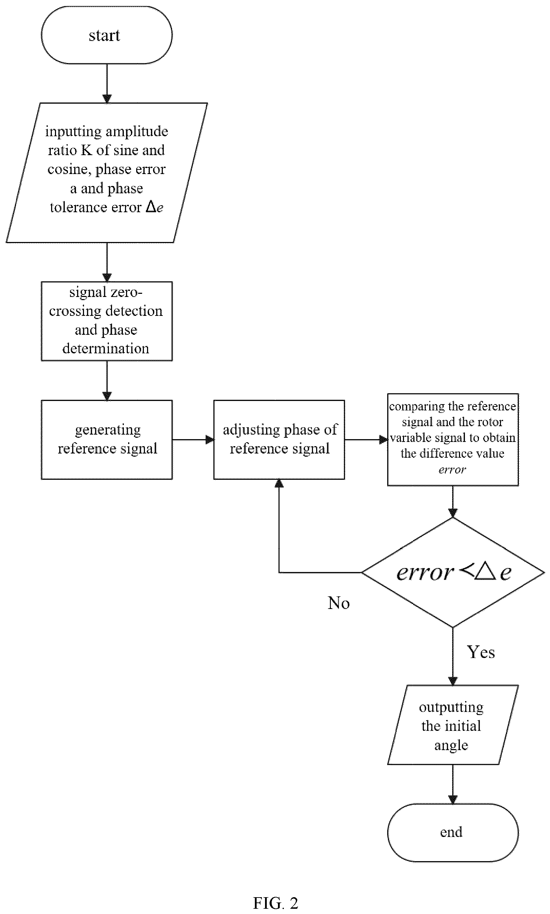

As shown in FIG. 2, which is a schematic flowchart of calculating an initial positioning angle of the method for decoding the rotary transformer according to an embodiment of the present application, where, after outputting the amplitude ratio K of sine and cosine, the phase error a and the allowable phase error , zero-crossing detection and phase determination are performed on the signal, thereby generating a reference signal (the reference signal in FIG. 2 refers to the second sine reference signal and the second cosine reference signal), and then the phase of the reference signal is adjusted by the angle step value until the difference error (the third difference signal) between the reference signal and the rotary transformer signal is less than the allowable phase error, and the rotor position of the rotary transformer is used as the initial positioning angle.

In this embodiment, the present application superimposes the phase corresponding to the quadrant by the angle step value, and can gradually calibrate the rotary transformer's own error by the angle step value, thereby improving the accuracy of the obtained initial positioning angle.

Based on the above-mentioned various embodiments of the method for decoding the rotary transformer of the present application, a specific embodiment of the method for decoding the rotary transformer of the present application is provided.

In this embodiment, the present application provides the following steps:

generating a high-frequency excitation signal using DA for an excitation of the rotary transformer signal;

collecting the sine and cosine output signals of the rotary transformer;

performing the zero-crossing detection on the excitation signal and the sine and cosine signals and comparing the first values after the zero-crossing, and determining the quadrant in which the current rotor position angle is located based on the positive and negative relationship between the excitation signal and the sine and cosine signals after the zero-crossing;

generating a reference signal (a second sine reference signal and a second cosine reference signal) based on the determined quadrant, where the reference signals are sine and cosine signals without an excitation signal;

multiplying the reference signal by the excitation signal and then differentially processing with the rotary transformer signal to form a third difference signal;

setting the "angle step value" and "phase error tolerance value", taking the initial phase corresponding to the quadrant as the starting point, accumulating and updating to the phase of the reference signal with the "angle step value" as the increment, and comparing the new differential value with the "phase error tolerance value" each time, in response to that the differential value is less than the "phase error tolerance value", determining the accumulation ends and the angle value obtained at this time as the initial positioning angle;

generating sine and cosine reference signals (a first sine reference signal and a first cosine reference signal) using a DAC, and substituting the amplitude ratio and phase difference of the rotary transformer sine and cosine winding signals into the first sine reference signal and the first cosine reference signal;

determining the rotor position obtained during the initial angle positioning process as the initial phase $y0$ of the reference signal (the first sine reference signal and the first cosine reference signal), and selecting a value close to the amplitude of the rotary transformer sine and cosine signal as the amplitude of the reference signal (the first sine reference signal and the first cosine reference signal). Substituting the sine and cosine reference signals from the rotary transformer signals to obtain two difference signals (the first difference signal and the second difference signal), and collecting the two difference signals and calculating their square sum.

In response to that the sum of squares is greater than the error threshold, the sum of squares is differentiated, and the derived formula is set equal to 0, and Newton's iteration method is used to solve it to obtain a new set of amplitudes and phases; and the steps of generating the first sine reference signal, the first cosine reference signal, and calculating the sum of squares are executed repeatedly until the sum of squares is less than or equal to the error threshold, and then the angle output by the rotary transformer is used as the decoding result.

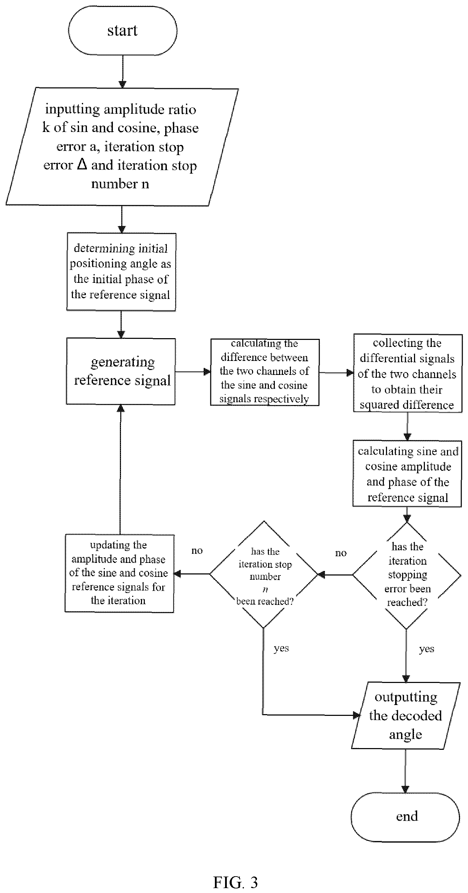

As shown in FIG. 3, which is a schematic diagram of a decoding process of the method for decoding the rotary transformer according to an embodiment of the present application, where after inputting the amplitude ratio K of sine and cosine, the number of iteration stops, the iteration stop error, and the phase error, the initial positioning angle can be used as the initial phase of the reference signal (in the following expression, the reference signal refers to the first sine reference signal and the first cosine reference signal) to generate a reference signal, and then the sine and cosine signals are respectively differenced, and then the two difference signals are collected to obtain the variance. In response to that the variance is greater than the error threshold, the variance (specifically the sum of squares in FIG. 3) is derived and iteratively calculated to obtain the amplitude and phase of the reference signal sine and cosine through iterative calculation. In response to that the phase difference between two adjacent iterations reaches the iteration stop error, and the newly calculated variance is less than or equal to the error threshold, or the number of cycles reaches the iteration stop number, the decoded angle is output.

In this embodiment, the present application uses the method of solving the updated amplitude and phase through derivation and Newton iteration method, which can not only make the output decoding angle not affected by the error of the rotary transformer itself, but also control the difference signal value collected by the ADC within a small range, thereby reducing the dependence of the decoding accuracy on the ADC accuracy.

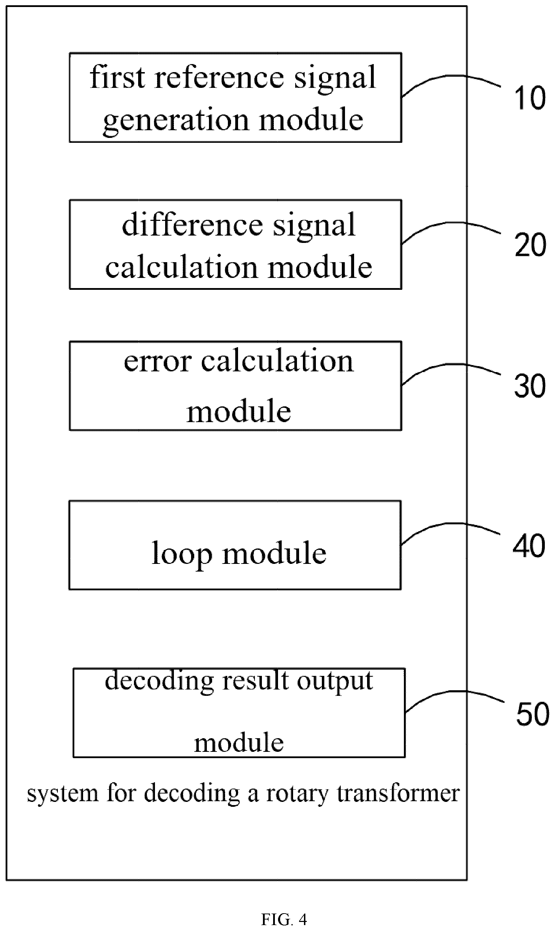

The present application further provides a system for decoding a rotary transformer. As shown in FIG. 4, the system for decoding the rotary transformer includes:

a first reference signal generating module 10, configured to generate a first sine reference signal and a first cosine reference signal based on a preset amplitude, a preset amplitude ratio of sine and cosine winding signals, a preset sine and cosine phase difference, and a preset phase of an initial positioning angle;

a difference signal calculation module 20, configured to obtain a first difference signal by subtracting the first sine reference signal from a real-time sine signal of the rotary transformer, and obtaining a second difference signal by subtracting the first cosine reference signal from a real-time cosine signal of the rotary transformer;

an error calculation module 30, configured to input the first difference signal and the second difference signal into a preset error model to obtain an overall error;

a loop module 40, configured to in response to detecting that the overall error is greater than a preset error threshold, perform regenerating the first sine reference signal and the first cosine reference signal based on an amplitude and a phase corresponding to the overall error in cycles; and

a decoding result output module 50, configured to in response to detecting that the overall error is less than or equal to the preset error threshold, determine an angle output by the rotary transformer as a decoding result.

In an embodiment, the system for decoding the rotary transformer further includes:

a number recording module, configured to record the number of cycles, and when the number of cycles is equal to the preset number of iteration stop times, the angle output by the rotary transformer is determined as the decoding result.

In an embodiment, the system for decoding the rotary transformer further includes:

a quadrant confirmation module, configured to perform zero-crossing detection on the excitation signal, sine signal and cosine signal of the rotary transformer, obtain zero-crossing detection results corresponding to the excitation signal, the sine signal and the cosine signal, and obtain the quadrant in which the current rotor position is located based on each of the zero-crossing detection results, where the zero-crossing detection result characterizes the positive and negative relationship of the signal after passing the zero point;

a second difference calculation module, configured to generate a second sine reference signal and a second cosine reference signal based on the phase corresponding to the quadrant, and input the sine signal, the cosine signal, the excitation signal, the second sine reference signal and the second cosine reference signal into a preset difference signal calculation model to obtain a third difference signal; and

an angle determination module, configured to determine the angle of the rotary transformer as an initial positioning angle in response to detecting that the third difference signal is less than or equal to a preset phase allowable error.

In an embodiment, the system for decoding the rotary transformer further includes:

a phase accumulation module, configured to in response to detecting that the third difference signal is greater than the phase allowable error, cyclically execute the steps of accumulating the phase corresponding to the quadrant by a preset angle step value to obtain a new phase, and generating a new second sine reference signal and a new second cosine reference signal based on the new phase, until the obtained third difference signal is less than or equal to the phase allowable error.

In an embodiment, the quadrant confirmation module is further configured for:

comparing a zero-crossing detection result of the excitation signal with a zero-crossing detection result of the sine signal to obtain the quadrant of the current rotor position;

comparing the zero-crossing detection result of the excitation signal with the zero-crossing detection result of the cosine signal to obtain the quadrant of the current rotor position;

in response to the zero-crossing detection result of the excitation signal characterizing a positive signal after passing the zero point, and the zero-crossing detection result of the sine signal also characterizing a positive signal after passing the zero point, determining the current rotor position to be the first or second quadrant;

in response to the zero-crossing detection result of the excitation signal characterizing a negative signal after passing the zero point, and the zero-crossing detection result of the sine signal also characterizing a negative signal after passing the zero point, determining the current rotor position to be the first or second quadrant;

in response to the zero-crossing detection result of the excitation signal characterizing a positive signal after passing the zero point, and the zero-crossing detection result of the sine signal characterizing a negative signal after passing the zero point, determining the current rotor position to be the third or fourth quadrant;

in response to the zero-crossing detection result of the excitation signal characterizing a negative signal after passing the zero point, and the zero-crossing detection result of the sine signal characterizing a positive signal after passing the zero point, determining the current rotor position to be the third or fourth quadrant.

in response to the zero-crossing detection result of the excitation signal characterizing a positive signal after passing the zero point, and the zero-crossing detection result of the cosine signal also characterizing a positive signal after passing the zero point, determining the current rotor position to be the first or fourth quadrant;

in response to the zero-crossing detection result of the excitation signal characterizing a negative signal after passing the zero point, and the zero-crossing detection result of the cosine signal also characterizing a negative signal after passing the zero point, determining the current rotor position to be the first or fourth quadrant;

in response to the zero-crossing detection result of the excitation signal characterizing a positive signal after passing the zero point, and the zero-crossing detection result of the cosine signal characterizing a negative signal after passing the zero point, determining the current rotor position to be the two or third quadrant; and

in response to the zero-crossing detection result of the excitation signal characterizing a negative signal after passing the zero point, and the zero-crossing detection result of the cosine signal characterizing a positive signal after passing the zero point, determining the current rotor position to be the two or third quadrant.

The system for decoding the rotary transformer provided by the present application adopts the method for decoding the rotary transformer in the above embodiment, which can solve the technical problem of how to improve the accuracy of the decoding of the rotary transformer. Compared with the related art, the beneficial effects of the system for decoding the rotary transformer provided by the present application are the same as the beneficial effects of the method for decoding the rotary transformer provided by the above embodiment, and other technical features in the system for decoding the rotary transformer are the same as the features disclosed in the above embodiment, which will not be repeated here.

The present application provides a device for decoding a rotary transformer, and the device for decoding the rotary transformer includes: at least one processor; and a memory communicatively connected to the at least one processor; where the memory stores instructions executable by the at least one processor, and the instructions are executed by the at least one processor so that the at least one processor can execute the method for decoding the rotary transformer in the first embodiment.

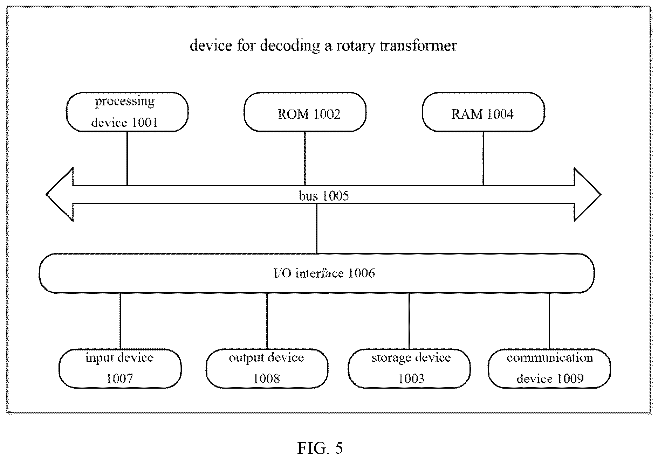

As shown in FIG. 5, it shows a schematic diagram of a device structure of a hardware operating environment involved in the method for decoding the rotary transformer according to an embodiment of the present application. The device for decoding the rotary transformer in the embodiment of the present application may include, but is not limited to, mobile terminals such as mobile phones, laptop computers, digital broadcast receivers, Personal Digital Assistants (PDAs), Portable Application Descriptions (PADs), Portable Media Players (PMPs), vehicle-mounted terminals (such as vehicle-mounted navigation terminals), etc., and fixed terminals such as digital TVs, desktop computers, etc. The device for decoding the rotary transformer shown in FIG. 5 is only an example and should not impose any limitations on the functions and scope of use of the embodiments of the present application.

As shown in FIG. 5, the device for decoding the rotary transformer may include a processing device 1001 (e.g., a central processing unit, a graphics processor, etc.), which may perform various appropriate actions and processes according to a program stored in a read-only memory (ROM) 1002 or a program loaded from a storage device 1003 to a random access memory (RAM) 1004. In RAM 1004, various programs and data required for the operation of the device for decoding the rotary transformer are also stored. The processing device 1001, ROM 1002, and RAM 1004 are connected to each other through a bus 1005. An input/output (I/O) interface 1006 is also connected to the bus. Generally, the following systems may be connected to the I/O interface 1006: an input device 1007 including, for example, a touch screen, a touchpad, a keyboard, a mouse, an image sensor, a microphone, an accelerometer, a gyroscope, etc.; an output device 1008 including, for example, a liquid crystal display (LCD), a speaker, a vibrator, etc.; a storage device 1003 including, for example, a magnetic tape, a hard disk, etc.; and a communication device 1009. The communication device 1009 can allow the device for decoding the rotary transformer to communicate with other devices wirelessly or by wire to exchange data. Although the device for decoding the rotary transformer with various systems is shown in the figure, it should be understood that it is not required to implement or have all the systems shown. More or fewer systems can be implemented or have alternatively.

According to the embodiments of the present application, the process described above with reference to the flowchart can be implemented as a computer software program. For example, the embodiments disclosed in the present application include a computer program product, which includes a computer program carried on a computer-readable medium, and the computer program includes a program code for executing the method shown in the flowchart. In such an embodiment, the computer program can be downloaded and installed from a network through a communication device, or installed from a storage device 1003, or installed from a ROM 1002. When the computer program is executed by the processing device 1001, the above-mentioned functions defined in the method of the embodiment disclosed in the present application are executed.

The device for decoding the rotary transformer provided by the present application adopts the method for decoding the rotary transformer in the above embodiment, which can solve the technical problem of how to improve the accuracy of the decoding of the rotary transformer. Compared with the related art, the beneficial effects of the device for decoding the rotary transformer provided by the present application are the same as the beneficial effects of the method for decoding the rotary transformer provided by the above embodiment, and other technical features in the device for decoding the rotary transformer are the same as the features disclosed in the method of the previous embodiment, which will not be repeated here.

It should be understood that the various parts disclosed in the present application can be implemented by hardware, software, firmware or a combination thereof. In the description of the above embodiments, specific features, structures, materials or characteristics can be combined in any one or more embodiments or examples in a suitable manner.

The above is only a specific implementation of the present application, but the protection scope of the present application is not limited thereto. Those skilled in the art can easily think of changes or substitutions within the technical scope disclosed in the present application, which should be included in the protection scope of the present application. Therefore, the protection scope of the present application should be based on the protection scope of the claims.

The present application provides a computer-readable storage medium having computer-readable program instructions (i.e., computer program) stored thereon, and the computer-readable program instructions are used to execute the method for decoding the rotary transformer in the above-mentioned embodiment.

The computer-readable storage medium provided by the present application may be, for example, a USB flash drive, but is not limited to electrical, magnetic, optical, electromagnetic, infrared, or semiconductor systems, systems or devices, or any combination of the above. More specific examples of computer-readable storage media may include, but are not limited to: an electrical connection with one or more wires, a portable computer disk, a hard disk, a RAM, a ROM, an erasable programmable read-only memory (EPROM), an optical fiber, a portable compact disk read-only memory (CD-ROM), an optical storage device, a magnetic storage device, or any suitable combination of the above. In this embodiment, the computer-readable storage medium may be any tangible medium containing or storing a program, which may be used by or in combination with an instruction execution system, system or device. The program code contained on the computer-readable storage medium may be transmitted using any appropriate medium, including but not limited to: wires, optical cables, Radio Frequency (RF), etc., or any suitable combination of the above.

The computer-readable storage medium may be included in the device for decoding the rotary transformer; or may exist independently without being assembled into the device for decoding the rotary transformer.

The computer-readable storage medium carries one or more programs. When the one or more programs are executed by the device for decoding the rotary transformer, the device for decoding the rotary transformer performs the following steps: generating a first sine reference signal and a first cosine reference signal based on a preset amplitude, a preset amplitude ratio of sine and cosine winding signals, a preset sine and cosine phase difference, and a preset phase of an initial positioning angle; obtaining a first difference signal by subtracting the first sine reference signal from a real-time sine signal of the rotary transformer, and obtaining a second difference signal by subtracting the first cosine reference signal from a real-time cosine signal of the rotary transformer; inputting the first difference signal and the second difference signal into a preset error model to obtain an overall error; in response to detecting that the overall error is greater than a preset error threshold, performing regenerating the first sine reference signal and the first cosine reference signal based on an amplitude and a phase corresponding to the overall error in cycles; and in response to detecting that the overall error is less than or equal to the preset error threshold, determining an angle output by the rotary transformer as a decoding result.

The present application may be written in one or more programming languages or a combination thereof, including object-oriented programming languages, such as Java, Smalltalk, C++, and conventional procedural programming languages, such as "C" or similar programming languages. The program code may be executed entirely on the user's computer, partially on the user's computer, as a separate software package, partially on the user's computer and partially on a remote computer, or entirely on a remote computer or server. In the case of a remote computer, the remote computer may be connected to the user's computer through any type of network, including a local area network (LAN) or a wide area network (WAN), or may be connected to an external computer (e.g., via the Internet using an Internet service provider).

The flowchart and block diagram in the accompanying drawings illustrate the possible architecture, function and operation of the system, method and computer program product according to various embodiments of the present application. In this regard, each square box in the flow chart or block diagram can represent a module, a program segment or a part of a code, and the module, the program segment or a part of the code contains one or more executable instructions for realizing the specified logical function. It should also be noted that in some alternative implementations, the functions marked in the square box can also occur in a sequence different from that marked in the accompanying drawings. For example, two square boxes represented in succession can actually be executed substantially in parallel, and they can sometimes be executed in the opposite order, depending on the functions involved. It should also be noted that each square box in the block diagram and/or flow chart, and the combination of the square boxes in the block diagram and/or flow chart can be implemented with a dedicated hardware-based system that performs a specified function or operation, or can be implemented with a combination of dedicated hardware and computer instructions.

The modules involved in the embodiments described in the present application may be implemented by software or hardware, where the name of the module does not constitute a limitation on the unit itself in some cases.

The present application is a computer-readable storage medium, which stores computer-readable program instructions (i.e., computer programs) for executing the above-mentioned method for decoding the rotary transformer, and can solve the technical problem of how to improve the accuracy of the rotary transformer decoding. Compared with the related art, the beneficial effects of the computer-readable storage medium provided in the present application are the same as the beneficial effects of the method for decoding the rotary transformer provided in the above-mentioned embodiment, and will not be repeated here.

The above are only some embodiments of the present application, and do not limit the scope of the present application thereto. Under the concept of the present application, equivalent structural transformations made according to the description and drawings of the present application, or direct/indirect application in other related technical fields are included in the scope of the present application.

**Claims**

1. A method for decoding a rotary transformer, **characterized by** comprising:

   (S10), generating a first sine reference signal and a first cosine reference signal based on a preset amplitude, a preset amplitude ratio of sine and cosine winding signals, a preset sine and cosine phase difference, and a preset phase of an initial positioning angle;
   (S20), obtaining a first difference signal by subtracting the first sine reference signal from a real-time sine signal of the rotary transformer, and obtaining a second difference signal by subtracting the first cosine reference signal from a real-time cosine signal of the rotary transformer;
   (S30), inputting the first difference signal and the second difference signal into a preset error model to obtain an overall error;
   (S40), in response to detecting that the overall error is greater than a preset error threshold, performing regenerating the first sine reference signal and the first cosine reference signal based on an amplitude and a phase corresponding to the overall error in cycles; or
   (S50), in response to detecting that the overall error is less than or equal to the preset error threshold, determining an angle output by the rotary transformer as a decoding result.

2. The method according to claim 1, wherein after the regenerating the first sine reference signal and the first cosine reference signal based on the amplitude and the phase corresponding to the overall error, the method further comprises:
   recording a cycle number, and determining the angle output by the rotary transformer as the decoding result in response to that the cycle number equals a preset iteration stop number.

3. The method according to claim 1, wherein before the generating the first sine reference signal and the first cosine reference signal based on the preset amplitude, the preset amplitude ratio of sine and cosine winding signals, the preset sine and cosine phase difference, and the preset phase of the initial positioning angle, the method further comprises:

   performing zero-crossing detection on an excitation signal, the sine signal, and the cosine signal of the rotary transformer to obtain respective zero-crossing detection results;
   obtaining a quadrant of a current rotor position based on the zero-crossing detection results, wherein the zero-crossing detection results represent positive or negative relationships of signals after passing a zero point;
   generating a second sine reference signal and a second cosine reference signal based on the phase corresponding to the quadrant;
   inputting the sine signal, the cosine signal, the excitation signal, the second sine reference signal, and the second cosine reference signal into a preset difference signal calculation model to obtain a third difference signal; and
   in response to detecting that the third difference signal is less than or equal to a preset phase tolerance error, determining the angle of the rotary transformer as the initial positioning angle.

4. The method according to claim 3, wherein after the inputting the sine signal, the cosine signal, the excitation signal, the second sine reference signal, and the second cosine reference signal into the preset difference signal calculation model to obtain the third difference signal, the method further comprises:
   in response to detecting that the third difference signal is greater than the phase tolerance error, performing accumulating the phase corresponding to the quadrant based on a preset angular step value to obtain a new phase and generating a new second sine reference signal and a new cosine reference signal based on the new phase in cycles, until the obtained third difference signal is less than or equal to the phase tolerance error.

5. The method according to claim 3, wherein the obtaining the quadrant of the current rotor position based on the zero-crossing detection results comprises:

comparing a zero-crossing detection result of the excitation signal with a zero-crossing detection result of the sine signal to obtain the quadrant of the current rotor position; or
comparing the zero-crossing detection result of the excitation signal with the zero-crossing detection result of the cosine signal to obtain the quadrant of the current rotor position.

6. The method according to claim 5, wherein the comparing the zero-crossing detection result of the excitation signal with the zero-crossing detection result of the sine signal to obtain the quadrant of the current rotor position comprises:

in response to the zero-crossing detection result of the excitation signal characterizing a positive signal after passing the zero point, and the zero-crossing detection result of the sine signal also characterizing a positive signal after passing the zero point, determining the current rotor position to be the first or second quadrant; or
in response to the zero-crossing detection result of the excitation signal characterizing a negative signal after passing the zero point, and the zero-crossing detection result of the sine signal also characterizing a negative signal after passing the zero point, determining the current rotor position to be the first or second quadrant; or
in response to the zero-crossing detection result of the excitation signal characterizing a positive signal after passing the zero point, and the zero-crossing detection result of the sine signal characterizing a negative signal after passing the zero point, determining the current rotor position to be the third or fourth quadrant; or
in response to the zero-crossing detection result of the excitation signal characterizing a negative signal after passing the zero point, and the zero-crossing detection result of the sine signal characterizing a positive signal after passing the zero point, determining the current rotor position to be the third or fourth quadrant.

7. The method according to claim 5, wherein the comparing the zero-crossing detection result of the excitation signal with the zero-crossing detection result of the cosine signal to obtain the quadrant of the current rotor position comprises:

in response to the zero-crossing detection result of the excitation signal characterizing a positive signal after passing the zero point, and the zero-crossing detection result of the cosine signal also characterizing a positive signal after passing the zero point, determining the current rotor position to be the first or fourth quadrant; or
in response to the zero-crossing detection result of the excitation signal characterizing a negative signal after passing the zero point, and the zero-crossing detection result of the cosine signal also characterizing a negative signal after passing the zero point, determining the current rotor position to be the first or fourth quadrant; or
in response to the zero-crossing detection result of the excitation signal characterizing a positive signal after passing the zero point, and the zero-crossing detection result of the cosine signal characterizing a negative signal after passing the zero point, determining the current rotor position to be the two or third quadrant; or
in response to the zero-crossing detection result of the excitation signal characterizing a negative signal after passing the zero point, and the zero-crossing detection result of the cosine signal characterizing a positive signal after passing the zero point, determining the current rotor position to be the two or third quadrant.

8. A system for decoding a rotary transformer, **characterized by** comprising:

a first reference signal generation module (10), configured to generate a first sine reference signal and a first cosine reference signal based on a preset amplitude, a preset amplitude ratio of sine and cosine winding signals, a preset sine and cosine phase difference, and a preset phase of an initial positioning angle;
a difference signal calculation module (20), configured to obtain a first difference signal by subtracting the first sine reference signal from a real-time sine signal of the rotary transformer, and obtaining a second difference signal by subtracting the first cosine reference signal from a real-time cosine signal of the rotary transformer;
an error calculation module (30), configured to input the first difference signal and the second difference signal into a preset error model to obtain an overall error;
a loop module (40), configured to in response to detecting that the overall error is greater than a preset error threshold, perform regenerating the first sine reference signal and the first cosine reference signal based on an amplitude and a phase corresponding to the overall error in cycles; and
a decoding result output module (50), configured to in response to detecting that the overall error is less than or equal to the preset error threshold, determine an angle output by the rotary transformer as a decoding result.

9. A device for decoding a rotary transformer, **characterized by** comprising:

a memory;
a processor; and
a computer program stored in the memory and executable on the processor,

wherein the computer program is configured to implement the method for decoding the rotary transformer according to any one of claims 1 to 7.

**10.** A computer-readable storage medium, **characterized in that** the computer-readable storage medium stores a computer program, and the computer program is configured to implement the method for decoding the rotary transformer according to any one of claims 1 to 7 when executed by a processor.

S10

generating a first sine reference signal and a first cosine reference signal based on a preset amplitude, a preset amplitude ratio of sine and cosine winding signals, a preset sine and cosine phase difference, and a preset phase of an initial positioning angle

S20

obtaining a first difference signal by subtracting the first sine reference signal from a real-time sine signal of the rotary transformer, and obtaining a second difference signal by subtracting the first cosine reference signal from a real-time cosine signal of the rotary transformer

S30

inputting the first difference signal and the second difference signal into a preset error model to obtain an overall error

S40

in response to detecting that the overall error is greater than a preset error threshold, performing regenerating the first sine reference signal and the first cosine reference signal based on an amplitude and a phase corresponding to the overall error in cycles

S50

in response to detecting that the overall error is less than or equal to the preset error threshold, determining an angle output by the rotary transformer as a decoding result

FIG. 1

start

inputting amplitude ratio K of sine and cosine, phase error a and phase tolerance error $\Delta e$

signal zero-crossing detection and phase determination

generating reference signal

adjusting phase of reference signal

comparing the reference signal and the rotor variable signal to obtain the difference value *error*

$error < \triangle e$

No

Yes

outputting the initial angle

end

FIG. 2

start

inputting amplitude ratio
k of sin and cosine, phase
error a, iteration stop
error Δ and iteration stop
number n

determining initial
positioning angle as
the initial phase of
the reference signal

generating
reference signal

calculating the
difference between
the two channels of
the sine and cosine
signals respectively

collecting the
differential signals
of the two channels
to obtain their
squared difference

calculating sine and
cosine amplitude
and phase of the
reference signal

updating the
amplitude and phase
of the sine and cosine
reference signals for
the iteration

no

has the
iteration stop
number
$n$
been reached?

no

has the
iteration
stopping
error been
reached?

yes

yes

outputting
the decoded
angle

end

FIG. 3

first reference signal
generation module

10

difference signal
calculation module

20

error calculation
module

30

loop module

40

decoding result output
module

50

system for decoding a rotary transformer

FIG. 4

device for decoding a rotary transformer

processing device 1001

ROM 1002

RAM 1004

bus 1005

I/O interface 1006

input device 1007

output device 1008

storage device 1003

communication device 1009

FIG. 5

Europäisches
Patentamt

European
Patent Office

Office européen
des brevets

# EUROPEAN SEARCH REPORT

**Application Number**

EP 25 15 0087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/073895 A1 (CHELLAMUTHU SHANMUGANAND [US] ET AL) 15 March 2018 (2018-03-15) * paragraph [0043] - paragraph [0047]; figure 4 * ----- | 1-10 | INV. G01D5/20 G01D3/02 H01F38/18 H02P6/16 |
| A | CA 1 313 696 C (HONEYWELL INC [US]) 16 February 1993 (1993-02-16) * paragraph [0006] - paragraph [0007]; figure 1 * ----- | 1-10 | |
| A | US 5 710 509 A (GOTO ATSUTOSHI [JP] ET AL) 20 January 1998 (1998-01-20) * column 7, line 50 - column 8, line 65; figure 1 * ----- | 1,8-10 | |

| | TECHNICAL FIELDS SEARCHED (IPC) |
|---|---|
| | G01D H01M |

The present search report has been drawn up for all claims

| Place of search | Date of completion of the search | Examiner |
|---|---|---|
| Munich | 13 June 2025 | Jakob, Clemens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 650 721 A1**

## ANNEX TO THE EUROPEAN SEARCH REPORT
## ON EUROPEAN PATENT APPLICATION NO.

EP 25 15 0087

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | Publication date | Patent family member(s) | Publication date |
|---|---|---|---|
| US 2018073895 A1 | 15-03-2018 | CN 109789554 A | 21-05-2019 |
| | | EP 3509803 A1 | 17-07-2019 |
| | | JP 6959602 B2 | 02-11-2021 |
| | | JP 2019533143 A | 14-11-2019 |
| | | KR 20190084940 A | 17-07-2019 |
| | | US 2018073895 A1 | 15-03-2018 |
| | | WO 2018049403 A1 | 15-03-2018 |
| CA 1313696 C | 16-02-1993 | CA 1313696 C | 16-02-1993 |
| | | EP 0308656 A1 | 29-03-1989 |
| | | JP H01152313 A | 14-06-1989 |
| | | US 4857926 A | 15-08-1989 |
| US 5710509 A | 20-01-1998 | DE 69634656 T2 | 02-03-2006 |
| | | EP 0772025 A1 | 07-05-1997 |
| | | JP 4138899 B2 | 27-08-2008 |
| | | JP H09126809 A | 16-05-1997 |
| | | US 5710509 A | 20-01-1998 |

EPO FORM P0459

For more details about this annex : see Official Journal of the European Patent Office, No. 12/82

23